# EUROPÄISCHE PATENTSCHRIFT

(11) **EP 0 516 609 B1**
(45) Veröffentlichungstag und Bekanntmachung des Hinweises auf die Patenterteilung: **12.03.1997**
(21) Anmeldenummer: 92890095.0
(22) Anmeldetag: 16.04.1992
(51) Int. Cl.: B60L 11/18

(54) **Regelschaltung für batteriebetriebene Elektrofahrzeuge**
Control circuit for battery-driven electric vehicles
Circuit de régulation pour véhicules électriques alimentés par batterie

(30) Priorität: 31.05.1991 AT 1102/91
(43) Veröffentlichungstag der Anmeldung: 02.12.1992
(73) Patentinhaber: STEYR-DAIMLER-PUCH AKTIENGESELLSCHAFT, 1010 Wien (AT)
(72) Erfinder: Bitsche, Otmar, Dipl.-Ing., A-8020 Graz (AT)
(74) Vertreter: Kovac, Werner

(56) Entgegenhaltungen:
- EP-A- 0 177 770
- US-A- 4 010 407
- US-A- 4 313 080
- US-A- 4 920 475
- TECHNISCHE RUNDSCHAU. Bd. 80, Nr. 22, 27. Mai 1988, BERN CH Seiten 86 - 89; J. KANABE ET AL: 'INDUSTRIELLE ANTRIEBE FÜR ELEKTROKLEINWAGEN'

## Beschreibung

Die Erfindung betrifft ein batteriebetriebenes Elektrofahrzeug mit einer Regelschaltung gemäß dem Oberbegriff des Patentanspruches 1.

Ein derartiges Elektrofahrzeug ist aus der Praxis bekannt, wobei eine spezielle Form, die ausschließlich für einen Dreiphasenmotor bestimmt ist, in der US 4 920 475 A geoffenbart wird. Bei dieser Schaltung werden alle drei Phasenwicklungen des Motors als Impedanz in den Ladestromkreis geschaltet, wobei der Mikroprozessor die Umschaltung von Lade- auf Motorbetrieb bewerkstelligt. Es wird angestrebt, den für den Fahrbetrieb aufwendig ausgelegten Regler bzw. wesentliche Teile davon auch für den Ladebetrieb auszunützen. Bei der aus der US 4 920 475 A bekannten Ausführung ist die im Ladestromkreis liegende Impedanz konstant und durch die Impedanz der Motorwicklungen vorgegeben, weshalb sich nur beschränkte Regelmöglichkeiten ergeben. Zur Erzielung einer weitergehenden Regelung wird es deshalb nach der genannten Literaturstelle bevorzugt, für den Ladebetrieb auf die Impedanz der Motorwicklung zu verzichten und dafür in den Ladestromkreis eine eigene, angepaßte, aber gesondert einzubauende Impedanz einzuschalten, die nur für den Ladebetrieb zur Wirkung kommt. Dadurch können anderseits die Regelungsmöglichkeiten des aufwendigen Reglers auch im Ladebetrieb gut ausgenützt werden.

Aus der US 4 313 080 A ist eine Regelschaltung für die Aufladung der Bordbatterie eines sogenannten Hybridfahrzeuges bekannt, bei dem die Bordbatterie über die Brennkraftmaschine und einen von dieser getriebenen Generator aufgeladen werden kann, wobei auch beim Betrieb über den Generator ein Aufladestrom erzeugt wird. Der aufwendige Regler ist auf den jeweiligen Fahrzustand ausgelegt, so daß er z.B. schon bei der Einleitung des Bremsbetriebes Vorsorge trifft, die Bremsenergie für die Aufladung auszunützen. Vor allem wird durch den aufwendigen Regler die Möglichkeit geschaffen, eine Schnellaufladung der Bordbatterie oder -batterien bei günstigem Gesamtwirkungsgrad für die Brennkraftmaschine vorzunehmen.

Aus den Patent Abstracts of Japan vo. 8, no. 166 (M-314) 2 August 1984 & JP-A-59 061 402 (TOSHIBA KK) 7 April 1994 ist es bei einem batteriebetriebenen Elektrofahrzeug bekannt, im Ladekreis wieder eine fest abgestimmte Impedanz vorzusehen, einen Regler sowohl für den Lade- als auch für den Fahrbetrieb zu verwenden und über den Regler einen Ein-Ausschalter zu betätigen, der beim Ladebetrieb die Motorwicklungen von der Regelschaltung abtrennt.

Aufgabe der Erfindung ist die Schaffung eines batteriebetriebenen Elektrofahrzeugs nach dem Oberbegriff des Patentanspruches 1, bei der ohne wesentliche Erhöhung des baulichen Aufwandes eine sichere und schonende Batterieaufladung unter voller Ausnützung der durch den aufwendigen Regler gegebenen Möglichkeiten erzielbar und dabei eine Anpassung der Impedanz des Ladekreises an die jeweiligen Erfordernisse möglich ist.

Die gestellte Aufgabe wird durch die Merkmale des Patentanspruches 1 gelöst.

Im Gegensatz zur bekannten Ausführung kann man die Impedanz bzw. den Scheinwiderstand durch Auswahl nur eines Teiles der Motorwicklung bzw. Änderung der Schaltung der Motorwicklung oder Serien- oder Parallelschaltung von Teilen der Motorwicklung an die momentan für den Aufladezustand günstigsten Werte anpassen und auch Schaltungsänderungen vornehmen, je nachdem, ob der Regelkreis als sogenannter Abwärtswandler, bei dem die Ladespannung für die Batterie kleiner als die Netzspannung sein soll, oder als Aufwärtswandler, bei dem die Ladespannung höher als die Netzspannung ist, eingesetzt werden soll. Dabei ist es möglich, die an sich aufwendigen Funktionen des Reglers auch für den Ladebetrieb weitgehend auszunützen. Es ist u.a. möglich, über die Gleichrichterschaltung einen welligen Gleichstrom zu erzeugen und über die Regelschaltung, je nach dem Momentanwert der Gleichspannung, aufwärts oder abwärts zu reglen. Dabei werden Blindverluste vermieden, so daß die durch die Absicherung der meisten Steckdosen begrenzte Netzleistung voll ausgenützt und damit die Ladezeit bei gegebener maximaler Netz- bzw. Gleichrichterleistung wesentlich verkürzt werden kann. Die erfindungsgemäße Ausführung kann sowohl bei Wechselstrommaschinen (Einphasenmaschinen) als auch bei Drehstrommotoren in Stern- oder Dreieckschaltung Verwendung finden.

Eine bevorzugte Ausführungsform entnimmt man dem Anspruch 2. Diese Konstruktion ist vor allen Dingen dann vorteilhaft, wenn von Haus aus eine aus mehreren Teilwicklungen gebildete Motorwicklung vorhanden ist, doch lassen sich auch viele, bisher durchgehend hergestellte Wicklungen ohne wesentliche Erhöhung des Gesamtaufwandes aus Teilwicklungen aufbauen.

Eine Schaltung gemäß Anspruch 3 ermöglicht beim Motorbetrieb eine äußerst genaue Einregelung des gewünschten Erregerstromes hinsichtlich der Stromstärke und der Stromrichtung und erlaubt auch bei Verwendung der Schaltung für die Batterieaufladung wahlweise die Einschaltung verschiedener Regelarten, insbesondere wahlweise eine Auf- oder Abwärtsregelung der Aufladung.

Weitere Einzelheiten und Vorteile des Erfindungsgegenstandes entnimmt man der nachfolgenden Zeichnungsbeschreibung.

In der Zeichnung ist der Erfindungsgegenstand beispielweise veranschaulicht. Es zeigen
- Fig. 1: das Prinzipschaltschema einer Regelschaltung für ein mit einem fremderregten Gleichstrommotor ausgestattetes Elektrofahrzeug,
- Fig. 2: das Prinzipschaltschema einer Regelschaltung für ein mit einem Drehstrommotor ausgestattetes Elektrofahrzeug,
- Fig. 3 und 4: die beim Batterieladebetrieb wirksam werdenden Teile der Regelschaltung nach Fig. 1 beim Einsatz als Abwärts- bzw. Aufwärtswandler,
- Fig. 5: eine mögliche Variante der Erregerwicklung,
- Fig. 6: die beim Ladebetrieb wirksam werdenden Teile der Regelschaltung nach Fig. 2 für im Stern geschaltete Motorwicklungen und
- Fig. 7: eine der Fig. 6 entsprechende Darstellung für im Dreieck geschaltete Motorwicklungen.

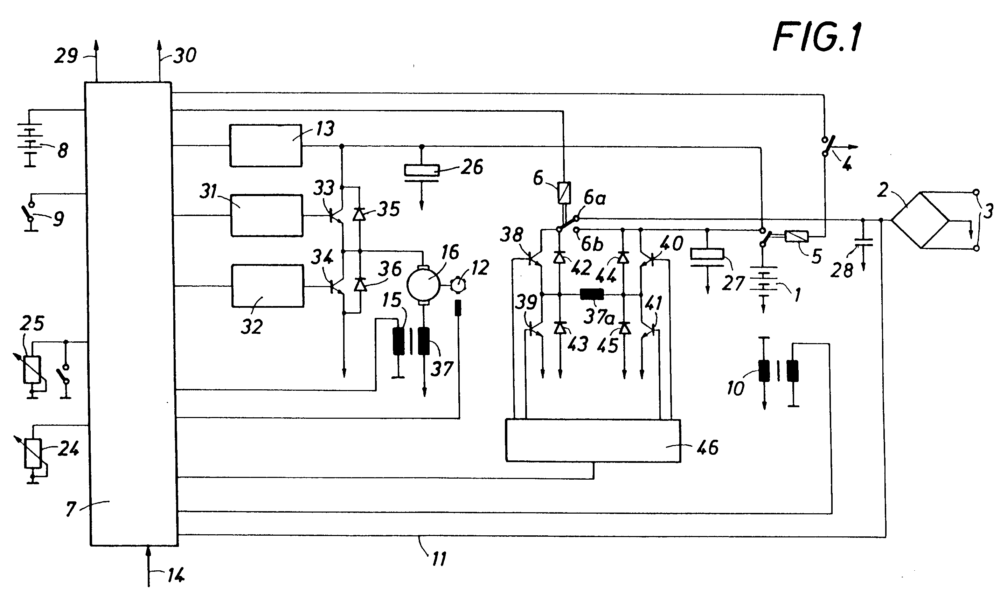

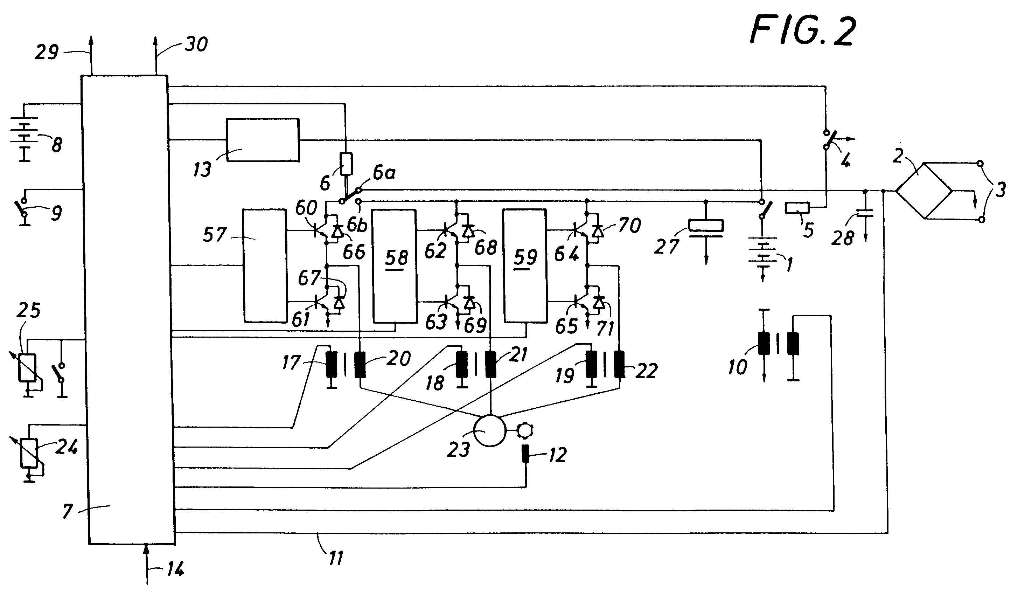

Bei den Schaltungen nach den Fig. 1 und 2 ist für ein Elektrofahrzeug jeweils eine Fahrbatterie 1, eine Gleichrichterschaltung 2 mit Anschlüssen 3 für ein Versorgungsnetz zur Wiederaufladung der Batterie, ein Notschalter 4 mit zugeordnetem, als Relais ausgebildeten Ein-Ausschalter 5 für die Batterie, ein Umschaltrelais 6 mit Schaltstellung 6a für den Ladebetrieb und Schaltstellung 6b für den Motorbetrieb und ein Teil einer Steuereinrichtung bildender Mikroprozessor 7 vorhanden, für den eine eigene Versorgungsbatterie 8 vorgesehen ist. Der Mikroprozessor 7 ist über einen eigenen Ein-Ausschalter 9 aktivierbar und besitzt Eingänge für Betriebsparameter, nämlich unter anderem einen mit einem Batteriestromwandler 10 verbundenen Eingang, eine Eingangsleitung 11 zur Erfassung der Netzspannung, einen mit einem Drehzahlfühler 12 für den Motor verbundenen Eingang, einen mit einem Spannungswandler 13 für die Batteriespannung verbundenen Eingang, nur durch einen Pfeil 14 angedeutete Eingänge für die Motor- bzw. Batterietemperatur und nach Fig. 1 einen mit einem Stromwandler 15 für den in der Feldwicklung eines fremderregten Gleichstrommotors 16 fließenden Strom verbundenen Eingang und nach Fig. 2 drei Eingänge, die mit Stromwandlern 17, 18, 19 an den drei Phasenwicklungen 20, 21, 22 eines Drehstrommotors 23 verbunden sind. Zusätzlich zu diesen Eingängen für Betriebsparameter sind in beiden Fällen Eingänge für einen Fahrbetriebsregler 24 und einen Bremsregler 25 vorgesehen, wobei die Schaltung so getroffen ist, daß in beiden Fällen der Motor 16 bzw. 23 im Bremsbetrieb als Generator arbeitet und die Batterie auflädt. In der Schaltung sind noch in beiden Fällen in bekannter Weise Puffer- und Glättungskondensatoren 26, 27, 28 vorhanden.

In den Mikroprozessor 7 integriert oder in einem gesonderten Speicher abgelegt sind Steuerprogramme abgespeichert, nach denen der Mikroprozessor 7 nach den erfaßten Parametern und den Signalen aus den Befehlseingängen 24, 25 den Motor 16 bzw. 23 für den Fahrbetrieb steuert bzw. bei stillstehendem Motor und eingestelltem Ladebetrieb die Batterieaufladung regelt. Dabei kann vorgesehen werden, daß das Relais 6 grundsätzlich bei Stillstand des Motors und Anliegen einer Spannung an 3 die Schaltstellung 6a ansteuert.

Der Mikroprozessor 7 besitzt Ausgänge 29, 30, die zu seriellen Schnittstellen und Anzeigeeinrichtungen führen.

Bei der Ausführung nach Fig. 1 ist der Motor 16 als fremderregter Gleichstrommotor ausgeführt. Für den Motorbetrieb steuert der Mikroprozessor 7 über entsprechende Ausgänge und Treiberstufen 31, 32 die Steuereingänge von zwei Transistoren 33, 34 an, die bezogen auf die Batteriespannung (der Schalter 6 befindet sich in Schaltstellung 6b) in Serie geschaltet und jeweils durch gegengeschaltete Dioden 35, 36 überbrückt sind. Die Verbindungsstellen der beiden Transistoren 33, 34 und der Dioden 35, 36 sind mit den Bürsten des Gleichstrommotors 16 und damit mit der Feldwicklung 37 verbunden.

Für die Erregerwicklung 37a ist in der ersichtlichen Steuerschaltung eine H-Brückenschaltung aus vier Transistoren 38 bis 41 mit gegengeschalteten Dioden 42 bis 45 vorgesehen. Die Transistoren 38 bis 41 sind vom Mikroprozessor 7 über Treiber-Decodierstufen 46 ansteuerbar, wodurch die Stromstärke und die Stromrichtung in der Erregerwicklung 37a über Impulsregelverfahren genau eingeregelt werden kann. Die Regelung erfolgt dabei, wie erwähnt, nach dem für den Mikroprozessor 7 eingespeicherten Fahrprogramm. Soweit die Schaltung bisher beschrieben wurde, ist sie dem Prinzip nach für die Motorregelung eines Gleichstrommotors auf einem Elektrofahrzeug bekannt.

Für den Ladebetrieb wird der Relaisschalter 6 in die Stellung 6a verstellt und der Motor 16 steht still. Der Mikroprozessor 7 erhält über seine Eingänge Informationen über die an der Gleichrichterschaltung 2 erzeugte Ladespannung, die momentane Batteriespannung, die Batterietemperatur, den Ladezustand der Batterie usw. Abhängig von der Batterietype und den eingegebenen Parametern wählt der Mikroprozessor aus seinem Speicherprogramm das spezifische Programm bzw. aufgrund des Ladezustandes der Batterie den momentanen Arbeitspunkt auf der ausgewählten Ladekennlinie an, nach der die Aufladung der Batterie erfolgen soll. Durch Ansteuerung der Transistoren 38 bis 41 entsprechend diesem Programm wird aus der Erregerwicklung 37a und den Transistoren 38 bis 41 unter Einbeziehung der gegengeschalteten Dioden 42 bis 45 ein Regelkreis gebildet, über den die Aufladung der Batterie 1 gemäß der angesprochenen Kennlinie bzw. dem vorabgespeicherten Programm geregelt und bei Erreichen des gewünschten Aufladezustandes unterbrochen wird.

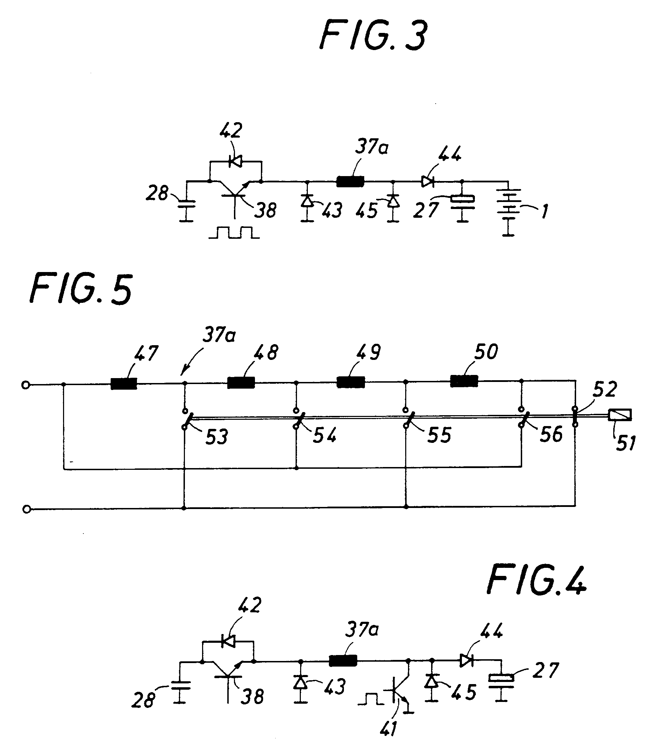

Bei einer möglichen Schaltung für die sogenannte Abwärtsregelung, bei der die Ladespannung unter der Netzspannung am Ausgang des Gleichrichters 2 liegt, werden gemäß Fig. 3 die Transistoren 39, 40 und 41 gesperrt und der Transistor 38 wird vom Mikroprozessor 7 über die Decoder-Treiberstufe 46 getaktet eingeschaltet, wobei die Taktlänge bzw. das Verhältnis Takt/Pausenzeit den mittleren Ladestrom an der Batterie 1 bestimmt und die Wicklung 37a als Impedanz im Ladestromkreis liegt.

Im Gegensatz dazu zeigt Fig. 4 eine Schaltung der genannten Elemente als Aufwärtswandler. Bei dieser Variante wird der Transistor 38 bleibend durchgeschaltet und der Transistor 41 wird getaktet, so daß an der nach 27 wie in Fig. 3 angeschlossenen Batterie 1 eine Ladespannung auftritt, die über der Netzspannung liegt.

Die Impedanz der Erregerwicklung 37a wird in manchen Fällen relativ hoch sein. Um den Scheinwiderstand herabzusetzen, kann man gemäß Fig. 5 eine z. B. in vier Teilwicklungen 47, 48, 49, 50 aufgeteilte Erregerwicklung 37a verwenden und den Umschalter 6 bzw. einen weiteren entsprechend dem Relais 6 ansprechenden Umschalter 51 vorsehen, der mit einem Kontakt 52 für den Motorbetrieb die Teilwicklungen 47 bis 50 in Serienschaltung in den Regelkreis einbindet und mit weiteren Kontakten 52, 54, 55, 56 bei Umschaltung auf den Ladebetrieb unter Abtrennung der Serienschaltung durch Öffnen des Kontaktes 52 die Teilwicklungen 47 bis 50 parallel schaltet.

Auch gemischte Serien-Parallelschaltung einzelner Teilwicklungen sind zur Erzielung der gewünschten bzw. günstigsten Impedanz für den Ladebetrieb möglich und man könnte mit Hilfe weiterer Kontakte des Schalters 51 auch nur für den Ladebetrieb Widerstände oder Impedanzen der Wicklung 37a zuschalten.

Bei der Ausführung nach Fig. 2 ist jeder Phasenwicklung 20 bis 22 eine vom Mikroprozessor 7 angesteuerte Decoder-Treiberstufe 57, 58, 59 zugeordnet, wobei jede dieser Stufen zwei mit ihrem Leistungsteil in Serie geschaltete Transistoren 60, 61, 62, 63, 64, 65 steuert, denen wieder Dioden 66 bis 71 in Gegenschaltung zugeordnet sind. Beim Motorbetrieb erfolgt durch gepulste Einschaltung der Wicklungen 20 bis 22 der Antrieb, wobei die Motordrehzahl, vorzugsweise zunächst nach der Spannung und bei Erreichen der Endspannung durch Frequenzregelung der Erregerfrequenz entsprechend den vorgegebenen Fahrparametern eingeregelt wird.

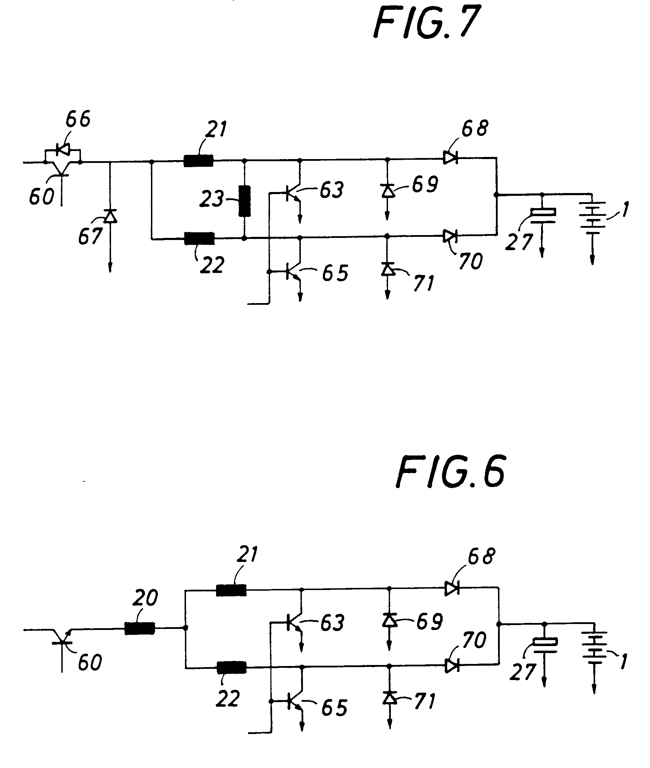

Die Wicklungen 20 bis 22 können in Stern- oder Dreieckschaltung verbunden sein, wie dies noch im Zusammenhang mit den Fig. 6 und 7 erläutert wird. Ein Wechselstrommotor als Fahrmotor 23 hätte im Regelkreis das gleiche Schaltschema wie der Regelkreis für den Drehstrommotor nach Fig. 2, wobei die Wicklungen 20, 21 die Phasenwicklungen des Wechselstrommotors sein könnten und an Stelle der Wicklung 22 ein direkter über die Transistoren 64 und 65 gesteuerter Zugang zur dritten Kommutatorbürste regelbar wäre. Für den Laderegelbetrieb kann man hier durch entsprechend Schaltung der Transistoren 60, 61 bzw. 62, 63 wahlweise die Wicklung 20 (Abwärtswandler) oder die Wicklungen 20, 21 (Aufwärtswandler) in den Ladekreis für die Batterie 1 einbeziehen.

Bei einer Sternschaltung der Motorwicklungen 20 bis 22 nach Fig. 6 werden, ebenso wie bei einer Dreieckschaltung nach Fig. 7, jeweils die Transistoren 60 für sich und die Transistoren 63, 65 gemeinsam entsprechend dem gewählten Steuerprogramm vom Mikroprozessor über die Decoder-Treiberstufen getaktet aus- und eingeschaltet, um auf diese Weise eine Anpassung an die ausgewählte Auflade-Kennlinie für die Batterie 1 zu erhalten.

## Patentansprüche

1. Batteriebetriebenes Elektrofahrzeug mit einer Regelschaltung, die eine über ein an ein Versorgungsnetz (3) anschließbares Bordladegerät mit Gleichrichterschaltung (2) aufladbare Batterie (1) und wenigstens einen Elektromotor (16) aufweisen, für den ein mit einem Mikroprozessor (7) versehener Regler vorgesehen ist, der mit Fühlern (10, 11, 13, 15) für Betriebsparameter des Fahrzeuges, der Batterie (1) und des Motors (16) verbundene Eingänge sowie Steuereingänge (9, 24, 25) zur Eingabe von Fahrbefehlen aufweist und den Stromdurchfluß der Motorwicklung (20 - 22, 37, 37a, 47 - 50) nach einem durch die an den Eingängen anstehenden Signale beeinflußten Steuerprogramm über kontaktlose elektronische Regelschalter mit Leistungsein- und -ausgängen und Regeleingängen, insbesondere über von ihm angesteuerte Transistoren (38 - 41), die durch gegengeschaltete Dioden (42 - 45) überbrückt sind, steuert, wobei die Motorwicklung (20 - 22, 37a, 47 - 50) bei stehendem Motor (16) eine Impedanz zwischen Gleichrichterschaltung (2) und Batterie (1) in einem ebenfalls vom Regler geregelten Ladestromkreis bildet, dadurch gekennzeichnet, daß ein Umschalter (6) für Fahr- oder Ladebetrieb vorgesehen ist, der beim Fahrbetrieb die Gleichrichterschaltung (2) von der Regelschaltung trennt und beim Ladebetrieb den vom Mikroprozessor (7) nach einem vorgegebenen Regelprogramm regelbaren Ladestromkreis einschaltet, in dem die Gleichrichterschaltung (2) mit der Batterie über einen aus den Regelschaltern für die Motorwicklung und der Motorwicklung gebildeten Regelkreis verbunden ist und daß der Umschalter (6) als Wählschalter ausgebildet oder ein gemeinsam mit ihm betätigbarer Wählschalter (51 - 56) vorgesehen ist, der zur Ampassung der Impedanz für den Ladebetrieb nur einen Teil (37a) der Motorwicklung (37, 37a) in den Ladestromkreis schaltet oder die benötigte Impedanz durch Serien- oder Parallelschaltung von Teilen (47 - 50) der Motorwicklung bestimmt.

2. Batteriebetriebenes Elektrofahrzeug nach Anspruch 1, dadurch gekennzeichnet, daß die Motorwicklung (37a) aus zwei oder mehreren Teilwicklungen (47 bis 50) besteht, die für den Fahrbetrieb in Serie geschaltet und zur Anpassung der Impedanz für den Ladebetrieb über den Umschalter (6) oder einen gemeinsam mit diesem betätigbaren Schalter (51 bis 56) in einer Parallel- oder gemischten Serien-Parallelschaltung verbindbar sind.

3. Batteriebetriebenes Elektrofahrzeug nach einem der Ansprüche 1 oder 2, dadurch gekennzeichnet, daß bei Ausbildung des Motors als fremderregter Gleichstrommotor (16) beide Anschlüsse der Erregerwicklung (37a) in einer H-Brückenschaltung an den Verbindungsstellen paarweise in Serie geschalteter, durch gegengeschaltete Dioden (42 bis 45) überbrückter Transistoren (38 bis 41) angeschaltet sind.

## Claims

1. Battery powered electric vehicle with a control circuit, comprizing a battery (1) which can be charged by an on-board charging unit having a rectifier circuit (2) connected to supply mains (3), and comprizing at least one electric motor (16), for which motor a controller having a microprocessor (7) is provided, the controller having input ports connected to sensors (10,11,13,15) for operating parameters of the vehicle, the battery (1) and the motor (16) and control input ports (9,24,25) for drive control commands, and which controller controls the electric current in the motor windings (20-22, 37,37a,47-50) according to a control program influenced by the input signals by means of contactless electronic control switches with power input and output ports and control input ports, especially by means of transistors (38-41) driven by the controller and bypassed by antiparallelly coupled diodes (42-45), the motor winding (20-22, 37,37a,47-50) providing an impedance between the rectifier circuit (2) and the battery (1) in a charging circuit equally controlled by the controller, when the motor stands still, **caracterized** in that a driving-or-charging-change-over switch (6) disconnects the rectifier circuit (2) from the control circuit in the driving mode, and in the charging mode activates the charging circuit which is controlled according to a predetermined control program by the microprocessor (7), in which charging circuit the rectifier circuit (2) is connected with the battery via a control circuit consisting of the control switches for the motor windings and the motor windings, and that the changeover switch (6) is a selecting switch, or a selecting switch (51-56) actuated together with the changeover switch, which changeover switch switches only a part (37a) of the motor winding (37,37a) into the charging circuit in order to adjust the impedance for the charging mode, or adjusts the necessary impedance by connecting parts of the motor windings (47-50) in series or in parallel.

2. Battery powered electric vehicle according to claim 1, **caracterized** in that the motor winding (37a) consists of two or more winding sections (47-50) which are connected in series in the driving mode and, in order to adjust the impedance in the charging mode, are connected in parallel or in a mixed series-parallel fashion, by means of the changeover switch (6) or a switch (51-56) operable together with the changeover switch.

3. Battery powered electric vehicle according to one of the claims 1 or 2, **caracterized** in that, the motor (16) being a separately excited direct current motor, both links of the excitation windings (37a) are connected in a H-bridge to the links of pairs of series-connected transistors (38-41) bridged by duplex-connected diodes (42-45).

## Revendications

1. Véhicule éléctrique à accumulateurs avec un circuit de commande, comprenant un accumulateur (1) apte d'être chargé par un chargeur d'accumulateur de bord comprenant un circuit de rectification (2) branché au réseau de bord (3), et comprenant au moins un moteur éléctrique (16), pour lequel un régulateur contenant un microprocesseur (7) est prévu, le régulateur ayant des entrées reliées à des capteurs (10,11,13,15) pour les paramètres de marche du vehicule, de l'accumulateur et du moteur (16), et des entrées de commande (9,24,25) pour des signaux de commande de marche, ce régulateur contrôlant le courant dans les enroulements de moteur (20-22, 37,37a,47-50) selon un programme de régulation influencé par les signaux d'entrée moyennant des commutateurs éléctroniques sans contacte pourvus d'entrées et de sorties de signal, notamment moyennant des transistors (38-41) entrainés par le régulateur et pontés par des diodes (42-45) branchées en opposition, les enroulements de moteur (20-22, 37,37a,47-50) constituant une impédance entre le circuit de rectification (2) et l'accumulateur (1) dans le circuit de chargement également contrôlé par le régulateur, lorsque le moteur est arrêté, **caractérisé** en ce qu'un commutateur de marche-ou-chargement (6) est prévu, lequel sépare le circuit de rectification (2) du circuit de régulation dans le mode de marche, et dans le mode de chargement branche le circuit de chargement commandé par le microprocessor (7) selon un programme de commande prédéterminé, dans lequel circuit de chargement le circuit de rectification (2) est relié à l'accumulateur par moyen d'un circuit de commande comprenant le commutateur de commande pour les enroulements de moteur, et en ce que le commutateur de marche-ou-chargement (6) est un commutateur de sélection, oubien un commutateur de sélection (51-56) actionné ensemble avec le commutateur de marche-ou-chargement, lequel commutateur de sélection branche seulement une partie (37a) de l'enroulement du moteur (37,37a) dans le circuit de chargement, dans le but d'adapter l'impédance au mode de chargement, oubien ajuste l'impédance nécessaire en branchant des parties de l'enroulement du moteur (47-50) en série oubien en parallèle.

2. Véhicule éléctrique à accumulateurs selon la revendication 1, **caractéri**sé en ce que l'enroulement du moteur (37a) comprend deux ou plusierurs sections (47-50) reliées en série dans le mode de marche et, dans le mode de chargement aux fins d'adjuster l'impédance, les sections sont reliées en parallèle oubien en configuration mixte serieparallèle par moyen du commutateur de marche-ou-chargement (6) ou par un commutateur (51-56) actionné ensemble avec le commutateur de marche-ou-chargement (6).

3. Véhicule éléctrique à accumulateurs selon l'une des revendications 1 ou 2, **caractérisé** en ce que, le moteur (16) étant un moteur à courant continu et à excitation indépendante, les deux connections des enroulements d'excitation (37a) sont reliées dans un bridge du type H aux raccordements de transistors (38-41) reliés en série et pontés par des diodes (42-45) en duplex.
